# EUROPÄISCHE PATENTANMELDUNG

(11) **EP 3 460 018 A1**
(43) Veröffentlichungstag der Anmeldung: **27.03.2019**
(21) Anmeldenummer: 17192900.3
(22) Anmeldetag: 25.09.2017
(51) Int. Cl.: C09J 163/00, C08G 59/40, C08G 59/42

(54) **EINKOMPONENTIGER HITZEHÄRTENDER EPOXIDKLEBSTOFF MIT VERBESSERTER HAFTUNG**

(71) Anmelder: SIKA TECHNOLOGY AG, 6340 Baar (CH)
(72) Erfinder: Hanley, John, Sterling Heights, MI Michigan 48310 (US)
(74) Vertreter: Sika Patent Attorneys

(57) **Zusammenfassung**

Die vorliegende Erfindung betrifft einen einkomponentigen hitzehärtenden Epoxidharzklebstoff, umfassend
a) mindestens ein Epoxidharz **A** mit durchschnittlich mehr als einer Epoxidgruppe pro Molekül;
b) mindestens einen latenten Härter für Epoxidharze; und
c) mindestens eine Carbonsäure ausgewählt aus substituierter oder unsubstituierter Bernsteinsäure und substituierter oder unsubstituierter Phthalsäure,
wobei der Epoxidharzklebstoff 1.7 bis 15 mmol der mindestens einen Carbonsäure pro 100 g Epoxidharzklebstoff enthält und der Epoxidharzklebstoff eine Viskosität von mehr als 10'000 Pas bei 25°C aufweist.

Der Epoxidharzklebstoff zeichnet sich insbesondere durch eine gute Haftung auf bestimmten Metallsubstraten wie Stahl und Magnesium aus.

## Beschreibung

### Technisches Gebiet

Die vorliegende Erfindung betrifft das Gebiet der einkomponentigen hitzehärtenden Epoxidharzklebstoffe sowie deren Verwendung insbesondere im Fahrzeugbau und Sandwichpanelbau.

### Stand der Technik

Hitzehärtende einkomponentige Epoxidharzklebstoffe werden schon länger als Klebstoffe im Rohbau sowie in Verstärkungselementen bzw. Strukturschäumen eingesetzt.

Ein wichtiges Einsatzgebiet von einkomponentigen hitzehärtenden Epoxidharzklebstoffen findet sich so im Fahrzeugbaum wo typischerweise Metallsubstrate wie Stahlbleche und Aluminium vorliegen, insbesondere beim Verkleben oder beim Ausschäumen von Hohlräumen im Rohbau. In beiden Fällen wird nach der Applikation der Epoxidharzzusammensetzung die Karosserie im KTL-(Kathodische Tauchlackierung)-Ofen erhitzt, wodurch auch die hitzehärtende Epoxidharzzusammensetzung ausgehärtet und gegebenenfalls geschäumt wird.

Verstärkungselemente, welche eine einkomponentige hitzehärtende Epoxidharzzusammensetzung aufweisen, die unter Hitzeeinwirkung einen Strukturschaum bildet, sind beispielsweise unter dem Handelsnamen SikaReinforcer® bekannt. US 6,387,470 B1 offenbart beispielsweise eine hitzehärtende und schäumbare Dichtmasse, welche Epoxidharze in Gegenwart eines Thermoplasten wie Polystyrol und eines thermoplastischen Elastomers wie SBS-Blockcopolymers enthält.

Bei den vorgehend erwähnten Metallsubstraten wie Stahlbleche, insbesondere beölte Stahlbleche, und Aluminium ist jedoch die Haftung der einkomponentigen hitzehärtenden Epoxidharzzusammensetzungen oft ungenügend.

### Darstellung der Erfindung

Die Aufgabe der vorliegenden Erfindung ist es daher, einen bei Raumtemperatur vorzugsweise festen einkomponentigen hitzehärtenden Epoxidharzklebstoff zur Verfügung zu stellen, welcher die Haftung des gehärteten Klebstoffs auf speziellen Metallsubstraten, insbesondere Metallsubstraten aus Stahl und Aluminium, verbessert, ohne dass eine Vorbehandlung des Metallsubstrats vor der Verklebung erforderlich ist. Es soll insbesondere eine verbesserte Zugscherfestigkeit erreicht werden. Vorzugsweise sollten starke Farbänderungen des ausgehärteten Epoxidharzklebstoffs bedingt durch den Aushärtungsprozesses ebenfalls vermieden werden.

Überraschenderweise wurde gefunden, dass diese Aufgabe insbesondere durch den Einsatz relativ geringer Mengen bestimmter Carbonsäuren in einem Epoxidharzklebstoff gemäss der vorliegenden Erfindung, insbesondere einem bei 25 °C vorzugsweise festen Epoxidharzklebstoff gemäss der vorliegenden Erfindung, gelöst werden kann. Die Erfindung betrifft daher den einkomponentigen hitzehärtenden Epoxidharzklebstoff wie in Anspruch 1 definiert.

Durch das Beimischen der Carbonsäure in den Klebstoff kann die Haftung auf speziellen Metallsubstraten wie Stahl und Aluminium deutlich verbessert werden. Insbesondere wird eine wärmebeständige Haftung erreicht.

Die Beimischung von Säuren in diese Systeme ist im Allgemeinen unüblich, da davon ausgegangen wurde, dass die Eigenschaften des Klebstoffs durch Reaktion der Säure mit Klebstoffkomponenten beeinträchtigt wird, was überraschenderweise aber nicht eintrat.

Ein anderer bei gewissen Carbonsäuren beobachteter Effekt sind lokale braune Verfärbungen. Es wird davon ausgegangen, dass hierfür die lokale Exothermie eine Rolle spielt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft somit einen einkomponentigen hitzehärtenden Epoxidharzklebstoff, umfassend
a) mindestens ein Epoxidharz **A** mit durchschnittlich mehr als einer Epoxidgruppe pro Molekül;
b) mindestens einen latenten Härter für Epoxidharze; und
c) mindestens eine Carbonsäure ausgewählt aus substituierter oder unsubstituierter Bernsteinsäure und substituierter oder unsubstituierter Phthalsäure.

Der Epoxidharzklebstoff enthält 1.7 bis 15 mmol der mindestens einen Carbonsäure pro 100 g Epoxidharzklebstoff. Der Epoxidharzklebstoff weist weiter eine Viskosität von mehr als 10'000 Pas bei 25°C auf, wobei die Viskosität oszillographisch bestimmt wird mittels eines Rheometers mit beheizbarer Platte (MCR 301, AntonPaar) (Spalt 1000 µm, Mess-Plattendurchmesser: 25 mm (Platte/Platte), Deformation 0,01 bei 5 Hz, Temperatur: 25°C).

Der Epoxidharzklebstoff ist einkomponentig, d.h. die Bestandteile des Epoxidharzklebstoffs, insbesondere das Epoxidharz und der Härter, sind in einer Komponente enthalten, ohne dass bei üblicher Umgebungstemperatur bzw. Raumtemperatur eine Härtung stattfindet. Daher ist der einkomponentige Epoxidharzklebstoff lagerstabil. Er ist daher in dieser Form handelbar, während bei zweikomponentigen Systemen die Mischung der Komponenten erst unmittelbar vor der Anwendung möglich ist.

Die Härtung des einkomponentigen Epoxidharzklebstoffs erfolgt durch Erhitzen, typischerweise bei einer Temperatur von über 70°C, z.B. im Bereich von 100 bis 220 °C.

Die Vorsilbe Poly in Ausdrücken wie Polyol oder Polyisocyanat bedeutet, dass die Verbindung zwei oder mehr der genannten Gruppen aufweist. Ein Polyisocyanat ist z.B. eine Verbindung mit zwei oder mehr Isocyanatgruppen.

Der Ausdruck "unabhängig voneinander" wie nachstehend verwendet bedeutet, dass in demselben Molekül mehrere gleich bezeichneten Substituenten gleiche oder unterschiedliche Bedeutung gemäß der Definition aufweisen können.

Die gestrichelten Linien in den Formeln dieses Dokumentes stellen jeweils die Bindung zwischen dem jeweiligen Substituenten und dem dazugehörigen Molekülrest dar.

Unter Raumtemperatur wird hier eine Temperatur von 23 °C verstanden, sofern nicht anders angegeben.

Der hitzehärtende einkomponentige Epoxidharzklebstoff enthält mindestens ein Epoxidharz **A** mit durchschnittlich mehr als einer Epoxidgruppe pro Molekül. Die Epoxidgruppe liegt vorzugsweise als Glycidylethergruppe vor.

Vorzugsweise beträgt der Anteil des Epoxidharzes **A** mit durchschnittlich mehr als einer Epoxidgruppe pro Molekül von 25 -70 Gew.-%, 25 -60 Gew.-%, 30 -55 Gew.-%, 30 -50 Gew.-%, besonders bevorzugt 30 -45 Gew.-%, bezogen auf das Gesamtgewicht des einkomponentigen hitzehärtenden Epoxidharzklebstoffs.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf

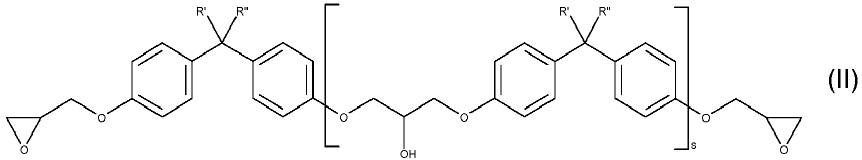

Hierbei stehen die Substituenten R' und R" unabhängig voneinander entweder für H oder CH₃.

Bei Epoxid-Festharzen steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index s einen Wert von > 1.5 aufweist.

Bei Epoxid-Flüssigharze steht der Index s für einen Wert von kleiner als 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxidharz **A** sind sogenannte Epoxid-Novolake. Diese weisen insbesondere die folgende Formel auf: 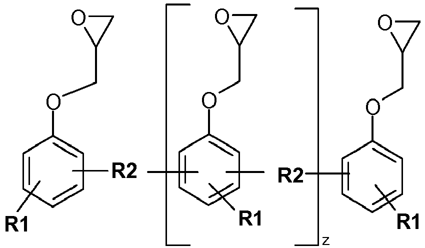 mit **R2**= 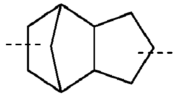 oder CH₂, **R1** = H oder Methyl und z = 0 bis 7.

Insbesondere handelt es sich hierbei um Phenol- oder Kresol-Epoxid-Novolake (**R2** = CH₂).

Solche Epoxidharze sind unter dem Handelnamen EPN oder ECN sowie Tactix® von Huntsman oder unter der Produktereihe D.E.N.™von Dow Chemical kommerziell erhältlich.

Bevorzugt stellt das Epoxidharz **A** ein Epoxid-Flüssigharz der Formel (II) dar.

In einer besonders bevorzugten Ausführungsform enthält die hitzehärtende Epoxidharzzusammensetzung sowohl mindestens ein Epoxid-Flüssigharz der Formel (II) mit s < 1, insbesondere kleiner als 0.2, als auch mindestens ein Epoxid-Festharz der Formel (II) mit s > 1.5, insbesondere von 2 bis 12.

Weiter ist es vorteilhaft, wenn der Anteil des vorgenanntes Epoxid-Flüssigharzes von 5 -40 Gew.-%, 10 -35 Gew.-%, 15 -35 Gew.-%, besonders bevorzugt 20 -30 Gew.-% beträgt, bezogen auf das Gesamtgewicht des einkomponentigen hitzehärtenden Epoxidharzklebstoffs.

Weiter ist es vorteilhaft, wenn der Anteil des vorgenanntes Epoxid-Festharzes von 5 -30 Gew.-%, 5 -25 Gew.-%, 5 -20 Gew.-%, besonders bevorzugt 10 -15 Gew.-% beträgt, bezogen auf das Gesamtgewicht des einkomponentigen hitzehärtenden Epoxidharzklebstoffs.

Der hitzehärtende einkomponentige Epoxidharzklebstoff enthält ferner mindestens einen latenten Härter für Epoxidharze. Latente Härter sind bei Raumtemperatur im Wesentlichen inert und werden durch erhöhte Temperatur, typischerweise bei Temperaturen von 70°C oder mehr, aktiviert, wodurch die Härtungsreaktion gestartet wird. Es können die üblichen latenten Härter für Epoxidharze eingesetzt werden. Es handelt sich bevorzugt um einen latenten Stickstoff enthaltenden Härter für Epoxidharze.

Vorzugsweise ist der latente Härter ausgewählt aus Dicyandiamid, Guanaminen, Guanidinen, Aminoguanidinen und deren Derivaten, substituierten Harnstoffen, Imidazolen und Amin-Komplexen, wobei Dicyandiamid bevorzugt ist

Der Anteil des latenten Härters beträgt bevorzugt 0,5 bis 12 Gew.-%, bevorzugter 1 bis 8 Gew.-%, insbesondere 2 - 6 Gew.-%, bezogen auf das Gesamtgewicht des Epoxidharzklebstoffs.

Ferner enthält der hitzehärtende einkomponentige Epoxidharzklebstoff mindestens eine Carbonsäure ausgewählt aus substituierter oder unsubstituierter Bernsteinsäure und substituierter oder unsubstituierter Phthalsäure.

Die genannten Carbonsäuren können unsubstituiert oder substituiert sein, wobei die unsubstituierten Carbonsäuren bevorzugt sind.

Bei den genannten substituierten Carbonsäuren können ein oder mehrere Wasserstoffatome, die an Kohlenstoffatome gebunden sind, durch Substituenten ersetzt sein, wobei die Substituenten gleich oder verschieden sein können, wenn zwei oder mehr Substituenten vorhanden sind. Die substituierten Carbonsäuren weisen bevorzugt einen oder zwei Substituenten auf.

Beispiele für geeignete Substituenten sind Alkyl, z.B. C₁-C₆-Alkyl, Cycloalkyl, z.B. C₃-C₆-Cycloalkyl, Aryl, z.B. Phenyl, Aralkyl, z.B. durch eine Phenylgruppe substituiertes C₁-C₃-Alkyl, Arylalkyl, z.B. durch eine oder mehrere C₁-C₄-Alkylgruppen substituiertes Phenyl, Alkyloxy, z.B. C₁-C₆-Alkoxy, Aryloxy, z.B. Phenoxy, Aralkyloxy, Hydroxyl, Nitro, Oxo (=O), Mercapto, Phenol und Halogen.

Die mindestens eine Carbonsäure ist bevorzugt ausgewählt aus Bernsteinsäure und Phthalsäureanhydrid. Als Carbonsäure wird bevorzugt wasserfreie Carbonsäure ohne Hydratwasser eingesetzt.

Handelt es sich bei der Carbonsäure um Bernsteinsäure ist dies dahingehend von Vorteil, dass besonders hohe Werte für die Zugscherfestigkeit erhalten werden.

Handelt es sich bei der Carbonsäure um Phthalsäureanhydrid ist dies dahingehend von Vorteil, dass es nicht zu einer Bildung von braunen Verfärbungen auf dem ausgehärteten Epoxidharzklebstoff kommt.

Der Epoxidharzklebstoff enthält 1.7 bis 15 mmol der mindestens einen Carbonsäure pro 100 g Epoxidharzklebstoff. Vorzugsweise enthält der Epoxidharzklebstoff 2 bis 13 mmol, 2.5 bis 10.5 mmol, 2.5 bis 8.5 mmol, 2.5 bis 6 mmol, besonders bevorzugt 3 bis 5 mmol, der mindestens einen Carbonsäure pro 100 g Epoxidharzklebstoff. Dies ist einer verbesserten Zugscherfestigkeit sowie einem kohäsiven Bruchbild, insbesondere bei Aushärtungstemperaturen von 170 - 205 °C, zuträglich, wie dies beispielsweise in Tabelle 1 ersichtlich ist. Weiter führen die bevorzugten Bereiche im Fall von Bernsteinsäure als Carbonsäure zu einer Reduktion der braunen Verfärbungen auf dem ausgehärteten Epoxidharzklebstoff.

Der einkomponentige hitzehärtende Epoxidharzklebstoff enthält vorzugsweise mindestens einen Zähigkeitsverbesserer **D.** Die Zähigkeitsverbesserer **D** können fest oder flüssig sein.

Insbesondere ist der Zähigkeitsverbesserer **D** ausgewählt ist aus der Gruppe bestehend aus endständig blockierten Polyurethanpolymeren **D1**, Flüssigkautschuken **D2** und Core-Shell-Polymeren **D3.** Bevorzugt ist der Zähigkeitsverbesserer **D** ausgewählt ist aus der Gruppe bestehend aus endständig blockierten Polyurethanpolymeren **D1** und Flüssigkautschuken **D2.**

Handelt es sich bei dem Zähigkeitsverbesserer **D** um ein endständig blockiertes Polyurethanpolymer **D1**, handelt es sich vorzugsweise um ein endständig blockiertes Polyurethanprepolymer der Formel (I).

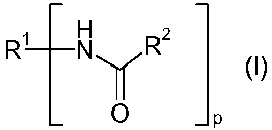

Hierbei steht R¹ für einen p-wertigen Rest eines mit Isocyanatgruppen terminierten linearen oder verzweigten Polyurethanprepolymers nach dem Entfernen der endständigen Isocyanatgruppen und p für einen Wert von 2 bis 8.

Weiterhin stehen R² unabhängig voneinander für einen Substituenten, welcher ausgewählt ist aus der Gruppe bestehend aus

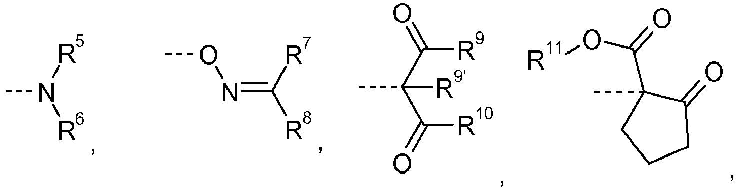

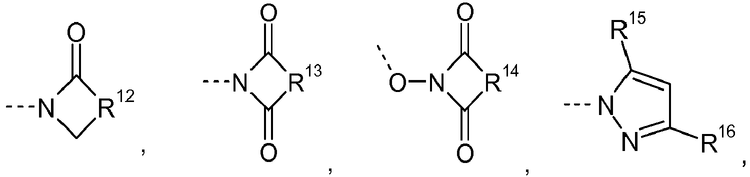

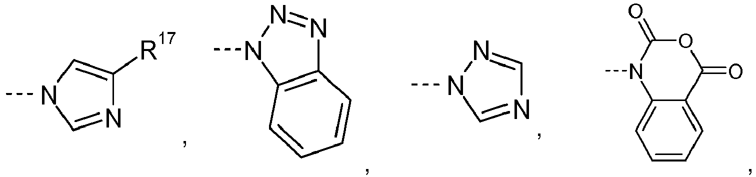

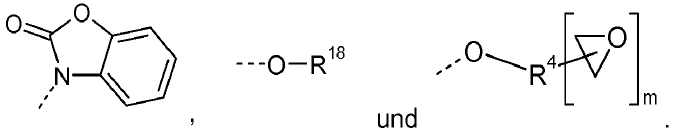

Hierbei steht R⁵, R⁶, R⁷ und R⁸ je unabhängig voneinander für eine Alkyl- oder Cycloalkyl- oder Aralkyl- oder Arylalkyl-Gruppe, oder R⁵ bildet zusammen mit R⁶, oder R⁷ zusammen mit R⁸, einen Teil eines 4- bis 7-gliedrigen Rings bilden, welcher gegebenenfalls substituiert ist.

Weiterhin stehen R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe und R¹¹ für eine Alkylgruppe.

R¹² , R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Schliesslich steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen und m für einen Wert von 1, 2 oder 3.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A. Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰ R¹⁵, R¹⁶ R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln

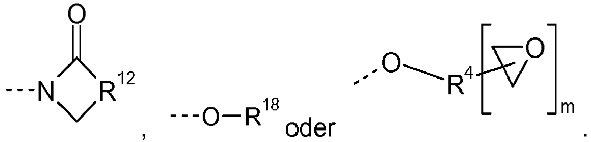

Als Substituent der Formel 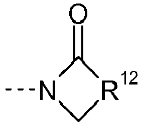 ist ε-Caprolactam nach Entfernung des NH-Protons bevorzugt.

Als Substituent der Formel ---O-R¹⁸ sind Monophenole oder Polyphenole, insbesondere Bisphenole, nach Entfernung eines phenolischen Wasserstoffatoms bevorzugt. Besonders bevorzugte Bespiele für derartigen Reste R² sind Reste, welche ausgewählt sind aus der Gruppe bestehend aus

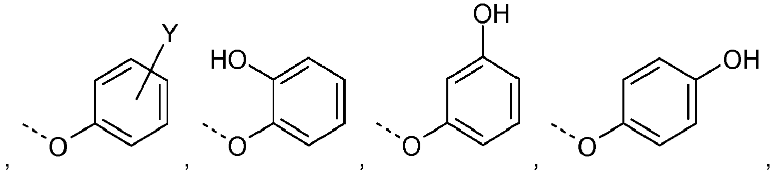

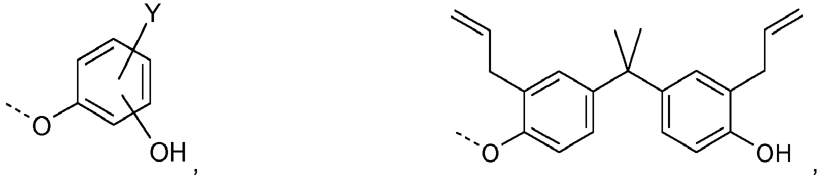

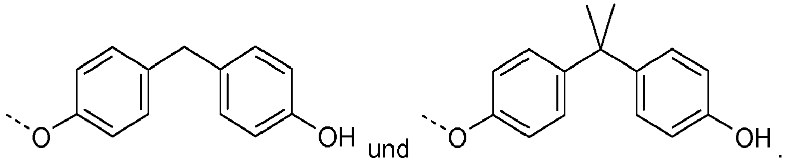

Der Rest Y steht hierbei für einen gesättigten, aromatischen oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl, Phenyl, Alkylether, Carbonsäureester oder ein ungesättigter C₁₅-Alkylrest mit 1 bis 3 Doppelbindungen bevorzugt.

Meist bevorzugt steht R² für ---O-R¹⁸.

Die Herstellung des endständig blockierten Polyurethanprepolymers der Formel (I) erfolgt aus dem Isocyanatgruppen terminierten linearen oder verzweigten Polyurethanprepolymer mit einer oder mehreren Isocyanat-reaktiven Verbindungen R²H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen R²H stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppen, auf dem R¹ basiert, lässt sich aus mindestens einem Diisocyanat oder Triisocyanat sowie aus einem Polymeren **Q_{PM}** mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

In einer bevorzugten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Bei dem Zähigkeitsverbesserer D kann es sich um einen Flüssigkautschuk **D2** handeln. Hierbei kann es sich z.B. um ein carboxyl- oder epoxidterminiertes Polymer handeln.

In einer ersten Ausführungsform kann dieser Flüssigkautschuk ein carboxyl- oder epoxidterminiertes Acrylnitril/Butadien-Copolymer oder ein Derivat davon sein. Derartige Flüssigkautschuke sind z.B. unter dem Namen Hypro / Hypox® CTBN und CTBNX und ETBN von Emerald Perfomance Materials, kommerziell erhältlich. Als Derivate sind insbesondere Epoxidgruppen aufweisende Elastomer-modifizierte Prepolymere, wie sie unter der Produktlinie Polydis®, insbesondere aus der Produktelinie Polydis® 36.., von der Firma Struktol® (Schill+Seilacher Gruppe, Deutschland) oder unter der Produktlinie Albipox (Evonik, Deutschland) kommerziell vertrieben werden, geeignet.

In einer zweiten Ausführungsform kann dieser Flüssigkautschuk ein Polyacrylatflüssigkautschuk sein, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Dow erhältlich.

Es können natürlich auch Mischungen von Flüssigkautschuken verwendet werden, insbesondere Mischungen von carboxyl- oder epoxidterminierten Acrylnitril/Butadien-Copolymeren oder von Derivaten davon.

Der Zähigkeitsverbesserer **D** kann in einer dritten Ausführungsform ein Core-Shell Polymer **D3** sein. Core-Shell-Polymere bestehen aus einem elastischen Kernpolymer und einem starren Schalen-Polymer. Besonders geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength™ von Arkema, Paraloid™ von Dow oder F-351™ von Zeon erhältlich sind.

Besonders bevorzugt enthält der einkomponentige hitzehärtende Epoxidharzklebstoff sowohl endständig blockierte Polyurethanpolymere **D1** wie auch Flüssigkautschuke **D2.**

Vorzugsweise beträgt der Anteil an Zähigkeitsverbesserer **D** von 5 -30 Gew.-%, 7 -25 Gew.-%, 10 -20 Gew.-%, besonders bevorzugt 10 - 15 Gew.-%, bezogen auf das Gesamtgewicht des Epoxidharzklebstoffs.

In einer bevorzugten Ausführungsform enthält der einkomponentige hitzehärtende Epoxidharzklebstoff zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Besonders bevorzugt handelt es sich um Füllstoffe ausgewählt aus der Gruppe bestehend aus Calciumcarbonat, Calciumoxid und pyrogene Kieselsäuren.

Vorteilhaft beträgt der Gesamtanteil des gesamten Füllstoffs **F** 5 - 40 Gewichts-%, vorzugsweise 20 - 40 Gewichts-%, bezogen auf das Gesamtgewicht des Epoxidharzklebstoffs.

Der einkomponentige hitzehärtende Epoxidharzklebstoff kann weitere Bestandteile, insbesondere Katalysatoren, Stabilisatoren, insbesondere Hitze- und/oder Lichtstabilisatoren, Thixotropiermittel, Weichmacher, Lösungsmittel, Farbstoffe und Pigmente, Korrosionsschutzmittel, Tenside, Entschäumer und Haftvermittler umfassen.

In einer bevorzugten Ausführungsform enthält der einkomponentige hitzehärtende Epoxidharzklebstoff ein physikalisches oder chemisches Treibmittel. Solche Treibmittel sind z.B. als Expancel™ der Firma Akzo Nobel oder Celogen™ der Firma Chemtura erhältlich. Der Anteil des Treibmittels, sofern eingesetzt, beträgt z.B. 0,1 bis 3 Gew.-%, bezogen auf das Gewicht des einkomponentigen hitzehärtenden Epoxidharzklebstoffs.

Ein besonders bevorzugter hitzehärtender einkomponentiger Epoxidharzklebstoff umfasst:
- 5 -40 Gew.-%, 10 -35 Gew.-%, 15 -35 Gew.-%, besonders bevorzugt 20 -30 Gew.-%, bezogen auf das Gesamtgewicht des einkomponentigen hitzehärtenden Epoxidharzklebstoffs, eines Epoxid-Flüssigharzes;
- 5 -30 Gew.-%, 5 -25 Gew.-%, 5 -20 Gew.-%, besonders bevorzugt 10 - 15 Gew.-% beträgt, bezogen auf das Gesamtgewicht des einkomponentigen hitzehärtenden Epoxidharzklebstoffs, eines Epoxid-Festharzes;
- 1 - 8 Gew.-%, insbesondere 2 - 6 Gew.-%, bezogen auf das Gesamtgewicht des einkomponentigen hitzehärtenden Epoxidharzklebstoffs, mindestens eines latenten Härters für Epoxidharze, insbesondere Dicyandiamind;
- 2 bis 13 mmol, 2.5 bis 10.5 mmol, 2.5 bis 8.5 mmol, 2.5 bis 6 mmol, besonders bevorzugt 3 bis 5 mmol, der mindestens einen Carbonsäure pro 100 g Epoxidharzklebstoff, wobei die mindestens eine Carbonsäure ausgewählt ist aus Bernsteinsäure und Phthalsäureanhydrid.
- 5 -30 Gew.-%, 7 -25 Gew.-%, 10 -20 Gew.-%, besonders bevorzugt 10 - 15 Gew.-%, bezogen auf das Gesamtgewicht des Epoxidharzklebstoffs, mindestens eines Zähigkeitsverbesserers **D**, ausgewählt ist aus der Gruppe bestehend aus endständig blockierten Polyurethanpolymeren **D1** und Flüssigkautschuken **D2**;
- vorzugsweise 0,1 bis 3 Gew.-%, bezogen auf das Gewicht des einkomponentigen hitzehärtenden Epoxidharzklebstoffs, eines physikalischen oder chemischen Treibmittels;
- vorzugsweise 5 - 40 Gewichts-%, vorzugsweise 20 - 40 Gewichts-%, bezogen auf das Gesamtgewicht der Epoxidharzzusammensetzung, von einem Füllstoffe **F** ausgewählt aus der Gruppe bestehend aus Calciumcarbonat, Calciumoxid und pyrogene Kieselsäuren.

Weiter kann es vorteilhaft sein, wenn der bevorzugte einkomponentige hitzehärtende Epoxidharzklebstoff zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht des Epoxidharzklebstoffs, aus den vorgenannten Bestandteilen besteht.

Der einkomponentige hitzehärtende Epoxidharzklebstoff weist eine Viskosität von mehr als 10'000 Pas bei 25°C, insbesondere mehr als 15'000 Pas bei 25°C, auf. Besonders bevorzugt weist die Viskosität bei 25 °C einen Wert mehr als 25'000 Pas auf. Am meisten bevorzugt ist der Epoxidharzklebstoff bei 25°C fest.

Es ist weiter bevorzugt, wenn der einkomponentige hitzehärtende Epoxidharzklebstoff eine Viskosität von mehr als 5'000 Pas bei 60°C, insbesondere mehr als 8'000 Pas bei 60°C, aufweist.

Die Viskosität wird hierbei oszillographisch mittels eines Rheometers mit beheizbarer Platte (MCR 301, AntonPaar) gemessen (Spalt 1000 µm, Mess-Plattendurchmesser: 25 mm (Platte/Platte), Deformation 0,01 bei 5 Hz, Temperatur: 25°C). Bei Messungen der Viskosität bei 60°C beträgt die Messtemperatur entsprechend 60°C.

Vorzugsweise ist der hitzehärtende Epoxidharzklebstoff im Wesentlichen frei von Hydroxyalkylamid oder Hydroxyalkylharnstoff **H.** Ein Hydroxyalkylamid weist die chemische Gruppierung der Formel (VI) auf. Ein Hydroxyalkylharnstoff weist die chemische Gruppierung der Formel (VII) auf.

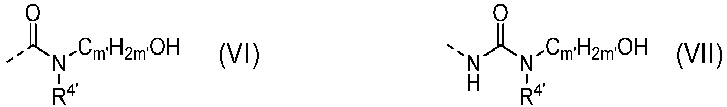

Hierbei ist steht m' für einen Wert von 2 bis 6, insbesondere von 2, und R^{4'} steht für H oder eine Alkylgruppe mit 1 bis 5 Kohlenstoffatomen oder für eine Hydroxyalkylgruppe der Formel C_{m'}H_{2m'}OH.

Unter dem Begriff "im Wesentlichen frei" wird hierbei ein Anteil von weniger als 50 % der Molmenge der Carbonsäure, insbesondere weniger als 20% der Molmenge der Carbonsäure, bevorzugt weniger als 10 % der Molmenge der Carbonsäure, an meisten bevorzugt weniger als 5 % der Molmenge der Carbonsäure, bezogen auf die Gesamtmolmenge der Carbonsäure des einkomponentigen hitzehärtenden Epoxidharzklebstoffs, verstanden.

Weist der erfindungsgemässe Epoxidharzklebstoff eine vorgehend genannte Carbonsäure und ein Hydroxyalkylamid oder Hydroxyalkylharnstoff **H** auf, können diese bei Temperaturerhöhung miteinander reagieren und durch eine Kondensationsreaktion Wasser bereitstellen, was zu einer unkontrollierten Schäumung der ausgehärteten Epoxidharzklebstoff führen kann.

Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Besonders hitzestabile Kunststoffe sind weiterhin Polysulfone oder Polyethersulfone,

Bevorzugt ist die Anwendung, bei der zumindest ein Material ein Metall ist. Insbesondere handelt es sich beim Metall um ein Metall, welches durch eine kathodische Tauchlackierung (KTL) beschichtet worden ist.

Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazinkbeschichteter Stahl, und nachträglich phosphatierter Stahl, sowie Aluminium insbesondere in den im Autobau typischerweise vorkommenden Varianten.

Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Ein weiterer Aspekt der vorliegenden Erfindung betrifft deshalb ein Verfahren zur Verklebung von hitzestabilen Substraten, welches die Schritte umfasst:
i) Applizieren eines hitzehärtenden Epoxidharzklebstoffs wie er vorgängig im Detail beschrieben wurde auf die Oberfläche eines hitzestabilen Substrates **S1**, insbesondere eines Metalls;
ii) Kontaktieren des applizierten hitzehärtenden Epoxidharzklebstoffs mit der Oberfläche eines weiteren hitzestabilen Substrates **S2**, insbesondere eines Metalls;
iii) Erhitzen des hitzehärtenden Epoxidharzklebstoffs auf eine Temperatur von 100 - 220 °C, insbesondere von 120 - 200 °C, bevorzugt zwischen 160 und 190 °C;
wobei das Substrat **S2** aus dem gleichen oder einem unterschiedlichen Material wie das Substrat **S1** besteht.

Die hitzestabilen Substrates **S1** und **S2** sind insbesondere die bereits vorgängig erwähnten hitzestabilen Materialien.

Aus einem derartigen Verfahren zum Verkleben von hitzestabilen Materialien resultiert ein Artikel umfassend einen gehärteten Klebverbund. Ein derartiger Artikel ist vorzugsweise ein Fahrzeug oder ein Anbauteil eines Fahrzeugs.

Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung des erfindungsgemässen hitzehärtenden Epoxidharzklebstoffs ist dessen Verwendung als hitzehärtender, insbesondere schäumbarer, Rohbauklebstoff im Fahrzeugbau.

Eine weiterhin besonders bevorzugte Verwendung des erfindungsgemässen hitzehärtenden Epoxidharzklebstoffs ist dessen Verwendung zum Verkleben oder Verstärken von Metallstrukturen oder verstärkendes Verfüllen von Hohlräumen im Fahrzeugbau oder Sandwichpanelbau. Besonders bevorzugt ist die Verwendung zum verstärkenden Verfüllen von Hohlräumen im Fahrzeugbau.

Der hitzehärtende Epoxidharzklebstoff kann insbesondere auf einem Träger aufgebracht werden. Derartige Träger sind insbesondere aus einem hitzestabilen Material, wie sie vorgängig bereits als hitzestabile Substarte **S1** erwähnt wurden. Die hitzehärtende Epoxidharzzusammensetzung wird hierbei im geschmolzenen Zustand auf das Trägermittel aufgebracht.

Es lassen sich somit Verstärkungselemente für die Verstärkung von metallischen Strukturen aufweisend einen Träger, auf welchem eine beschriebene hitzehärtende Epoxidharzzusammensetzung aufgebracht ist, einfach realisieren.

Diese Verstärkungselemente werden auf der zu verstärkenden metallischen Struktur fixiert oder in einen Hohlraum der zu verstärkenden metallischen Struktur fixiert. Das Fixieren kann hierbei durch ein Fixiermittel wie durch einen Clip, einen Haken, eine Niete, eine Schraube, eine Nut oder einen Klebstoff erfolgen oder aber es kann durch geeignete Geometrie der Struktur, welche ein Einklemmen ermöglichen, erfolgen. Somit ist es bevorzugt, dass der Träger ein derartiges Fixierungsmittel aufweist. Insbesondere ist es bevorzugt, wenn die zu verstärkende Struktur ein zum Fixierungsmittel korrespondierendes Gegenstück aufweist, wie zum Beispiel eine vorspringende Kante/Haken oder Schraube/Schraubgewinde.

Ein weiterer Aspekt der vorliegenden Erfindung betrifft somit einen ausgehärteten Epoxidharzklebstoff, welcher erhalten wird durch das Erhitzen eines vorgängig im Detail beschriebenen hitzehärtenden Epoxidharzklebstoffs auf eine Temperatur von 100 - 220 °C, vorzugsweise 120 - 200°C.

Insbesondere betrifft ein weiterer Aspekt der vorliegenden Erfindung einen Strukturschaum, welcher durch Erhitzen aus eines bereits beschriebenen hitzehärtenden Epoxidharzklebstoffs, erhalten wird.

Ein Strukturschaum weist die wesentlichen Eigenschaften auf, dass er einerseits beim Erhitzen aufgeschäumt wird und andererseits durch die chemische Aushärtung der Zusammensetzung in der Lage ist, grosse Kräfte zu übertragen und somit eine Struktur, typischerweise eine metallische Struktur, zu verstärken. Typischerweise werden derartige Strukturschäume in Hohlräumen von metallischen Strukturen eingesetzt. Sie können insbesondere auch als Bestandteil in den vorgängig beschriebenen Verstärkungselementen eingesetzt werden.

Beispielsweise können sie in den Hohlräumen von Tragsäulen einer Verkehrsmittel-Karosserie angebracht werden. Durch den Träger wird dieses Verstärkungselement am gewünschten Ort gehalten. Die Einbringung des Verstärkungselementes erfolgt üblicherweise im Rohbau, d.h. beim Bau der Karosserie. Die Karosserie gelangt nach dem Durchlaufen eines KTL-Bades in einen KTL-Ofen, wo bei einer Temperatur von typischerweise 160 bis 190 °C der KTL-Lack eingebrannt wird. Der bei diesen Temperaturen gebildete Wasserdampf führt als Treibmittel zur Bildung eines Schaums und die hitzehärtende Zusammensetzung reagiert hierbei chemisch unter Vernetzung, was zur Aushärtung des Klebstoffes führt.

Diese Verstärkungselemente werden deshalb häufig an Orten eingesetzt, bei welchen es nach der Montage aufgrund der Form und/oder des engen Ausmasses solcher Hohlräume vielfach schwierig ist, diese effizient zu verstärken, abzudichten oder die Geräuschübertragung einzudämmen.

Dank dieser Strukturschäume ist es möglich, trotz geringerem Gewicht hohe Festigkeiten und dichte Strukturen zu erhalten. Zudem ist es möglich, durch die verfüllende und abdichtende Funktion des Strukturschaums auch den Innenraum von Hohlräumen abzuschotten und dadurch die Fahrgeräusche und Vibrationen markant zu reduzieren.

Weiterhin umfasst die Erfindung die Verwendung mindestens einer Carbonsäure ausgewählt aus substituierter oder unsubstituierter Bernsteinsäure und substituierter oder unsubstituierter Phthalsäure, wie sie beschrieben sind, zur Erhöhung der Zugscherfestigkeit gemäss der ASTM D1002-10 bei Aushärtung bei 170°C für 20 min und/oder bei 205°C für 40 min, insbesondere bei 170°C für 20 min, eines einkomponentigen hitzehärtenden Epoxidharzklebstoffs, insbesondere eines hitzehärtenden Epoxidharzklebstoffs im Fahrzeugbau und Sandwichpanelbau. Vorzugsweise handelt es sich um einen hitzehärtenden Epoxidharzklebstoff wie er vorgehend beschrieben wurde. Die Erhöhung der Zugscherfestigkeit bezieht sich auf den Vergleich zu einkomponentigen hitzehärtenden Epoxidharzklebstoffen welche keine der vorgehend erwähnten Carbonsäuren enthalten. Die Bestimmung der Zugscherfestigkeit erfolgt vorzugsweise gemäss dem im Beispielteil verwendeten Verfahren. Vorzugsweise beträgt die Art und Menge der eingesetzten mindestens einen Carbonsäure der vorgehend beschriebenen Art und Menge, insbesondere werden auch die vorgehend als bevorzugt ausgewiesenen Arten und Mengen bevorzugt eingesetzt.

Im Folgenden wird die Erfindung durch Beispiele weiter erläutert, die die Erfindung aber in keiner Weise einschränken sollen.

### Beispiele

In den Beispielen wurden für die Prüfung der jeweiligen Eigenschaften folgende Prüfmethoden verwendet.

### Viskosität

Die Viskosität wurde oszillographisch mittels eines Rheometers mit beheizbarer Platte (MCR 301, AntonPaar) gemessen (Spalt 1000 µm, Mess-Plattendurchmesser: 25 mm (Platte/Platte), Deformation 0,01 bei 5 Hz, Temperatur: 20°C-70°C, Aufheizrate 10°C/min).

### Zugscherfestigkeit (LSS)

Die Bestimmung ist an der ASTM D1002-10 orientiert. Die Zugscherfestigkeit wurde mit folgender Anordnung (Dimensionen in mm) bestimmt:
Prüftemperatur: 23°C
Klebefläche: 12.7 mm x 25.4 mm
Klebschichtdicke: 0,8 mm
Aushärtung: 20 min bei 170°C, respektive 40 min bei 205°C
Prüfgeschwindigkeit: 13 mm/min

### Kohäsionsbruch/Adhäsionsbruch (Bruchbild)

Optische Beurteilung des aus der Zugscherfestigkeit erhaltenen Bruchbildes, unterteilt in CF und AF. CF = Kohäsionsbruch, AF= Adhäsionsbruch.

### Beispiele Prüfung

Als Basisformulierung für Epoxidharzklebstoffe wurde eine nachfolgend beschriebene Formulierung verwendet:

**Basisformulierung:**

| **Rohstoff** | **Gew.-%** |
|---|---|
| Epoxid-Flüssigharz gemäss Formel (X) | 20 |
| Epoxid-Festharz gemäss Formel (XI) | 15 |
| Dicyandiamid | 3 |
| Endständig blockiertes Polyurethanpolymer **D1** gemäss Formel (I) | 10 |
| Flüssigkautschuk **D2** | 10 |
| Treibmittel | 0.1 |
| Trocknungsmittel | 3 |
| Füllstoffgemisch aus Calciumcarbonat, Calciumoxid und pyrogener Kieselsäure | 38.9 |

Der Basisformulierung wurde jeweils eine Carbonsäure in einem bestimmten Anteil wie in nachstehender Tabelle 1 angeführt zugesetzt (Angaben in mmol Säure/100 g Epoxidharzklebstoff). Als Referenz wurde die Basisformulierung ohne Zugabe von Carbonsäure getestet (Ref1 und Ref2). Weiter wurde als nicht erfindungsgemässe Carbonsäure 1-[2-(Isopropenylcarbonyloxy)ethyl]-succinat verwendet (Ref3 und Ref4). Als Substrat für die Haftprüfung wurde beöltes Stahlblech bzw. Aluminium eingesetzt.

| | | |
|---|---|---|
| Stahl (HDG) beölt | DC06+ZE 75/75 APO | elektrolytisch verzinktes Stahlblech, beölt |
| Aluminium | Aluminium-Legierung 6061 | Aluminium-Legierung |

Die Ergebnisse der Messungen der Zugscherfestigkeit (LSS) sowie des Bruchbildes sind ebenfalls in Tabelle 1 angeführt. Daraus ist ersichtlich, dass die Zusammensetzungen ohne Carbonsäure signifikant tiefere Werte für die Zugscherfestigkeit zeigen. Weiter ergibt sich auf dem Substrat Aluminium bei beiden Aushärtungstemperaturen ein adhäsives Bruchbild.

Weiter zeigt 1-[2-(Isopropenylcarbonyloxy)ethyl]-succinat als Monoester aus (2-Hydroxyethyl)methacrylat (HEMA) und Bernsteinsäure ein Negativbeispiel für eine nicht erfindungsgemässe Carbonsäure (Ref3 und Ref4). Auch diese Zusammensetzungen zeigen signifikant tiefere Werte für die Zugscherfestigkeit.

Sämtliche Zusammensetzungen Ref1 - Ref4 sowie Ex1 - Ex6 waren bei 25°C fest und hatten daher eine Viskosität bei 25 °C von mehr als 25'000 Pas. Die Viskosität bei 60 °C betrug 10'000 Pas.

**Tabelle 1, * mmol Carbonsäure pro 100 g Epoxidharzklebstoff, **braune punktförmige Verfärbungen auf dem ausgehärteten Klebstoff.**

| Versuch | Substrat | **Carbonsäure** | **mmol*** | **LSS (20'@170°C)** | **LSS (40'@205°C)** | **Bruchbild** | **braune Verfärbungen**** |
|---|---|---|---|---|---|---|---|
| Ref1 | Stahl beölt (HDG) | Keine Säure | - | 7.2 MPa | 4.2 MPa | CF/AF | keine |
| Ex1 | Stahl beölt (HDG) | Bernsteinsäure | 4.2 | 10.6 MPa | 9.0 MPa | CF/CF | sehr wenig |
| Ex2 | Stahl beölt (HDG) | Phthalsäureanhydrid | 3.4 | 9.6 MPa | 8.1 MPa | CF/CF | keine |
| Ex3 | Stahl beölt (HDG) | Bernsteinsäure | 8.4 | 10.0 MPa | *8.0 MPa | CF/CF | wenig |
| Ex4 | Stahl beölt (HDG) | Bernsteinsäure | 12.6 | 8.9 MPa | **7.5 MPa | CF/AF | viel |
| | | | | | | | |
| Ref2 | Aluminium | Keine Säure | - | 4.4 MPa | 3.1 MPa | AF/AF | keine |
| Ex5 | Aluminium | Bernsteinsäure | 4.2 | 9.1 MPa | 9.1 MPa | CF/CF | sehr wenig |
| Ref3 | Aluminium | 1-[2-(Isopropenylcarbonyloxy)ethyl]-succinat | 2.2 | 6.4 MPa | 6.5 MPa | CF/AF | keine |
| Ref4 | Aluminium | 1-[2-(Isopropenylcarbonyloxy)ethyl]-succinat | 4.4 | 6.6 MPa | 5.2 MPa | CF/AF | keine |
| Ex6 | Aluminium | Phthalsäureanhydrid | 3.4 | 8.4 MPa | 7.4 MPa | CF/CF | keine |

## Patentansprüche

1. Einkomponentiger hitzehärtender Epoxidharzklebstoff, umfassend
a) mindestens ein Epoxidharz **A** mit durchschnittlich mehr als einer Epoxidgruppe pro Molekül;
b) mindestens einen latenten Härter für Epoxidharze; und
c) mindestens eine Carbonsäure ausgewählt aus substituierter oder unsubstituierter Bernsteinsäure und substituierter oder unsubstituierter Phthalsäure,
wobei der Epoxidharzklebstoff 1.7 bis 15 mmol der mindestens einen Carbonsäure pro 100 g Epoxidharzklebstoff enthält und der Epoxidharzklebstoff eine Viskosität von mehr als 10'000 Pas bei 25°C aufweist, wobei die Viskosität oszillographisch bestimmt wird mittels eines Rheometers mit beheizbarer Platte (MCR 301, AntonPaar) (Spalt 1000 µm, Mess-Plattendurchmesser: 25 mm (Platte/Platte), Deformation 0,01 bei 5 Hz, Temperatur: 25°C).

2. Einkomponentiger hitzehärtender Epoxidharzklebstoff nach Anspruch 1, wobei die mindestens eine Carbonsäure ausgewählt ist aus Bernsteinsäure und Phthalsäureanhydrid.

3. Einkomponentiger hitzehärtender Epoxidharzklebstoff nach Anspruch 1 oder 2, wobei der Epoxidharzklebstoff 2 bis 13 mmol, 2.5 bis 10.5 mmol, 2.5 bis 8.5 mmol, 2.5 bis 6 mmol, besonders bevorzugt 3 bis 5 mmol, der mindestens einen Carbonsäure pro 100 g Epoxidharzklebstoff enthält.

4. Einkomponentiger hitzehärtender Epoxidharzklebstoff nach irgendeinem der vorgehenden Ansprüche, wobei der Anteil des Epoxidharzes **A** mit durchschnittlich mehr als einer Epoxidgruppe pro Molekül von 25 -70 Gew.-%, 25 -60 Gew.-%, 30 -55 Gew.-%, 30 -50 Gew.-%, besonders bevorzugt 30 -45 Gew.-% beträgt, bezogen auf das Gesamtgewicht des einkomponentigen hitzehärtenden Epoxidharzklebstoffs.

5. Einkomponentiger hitzehärtender Epoxidharzklebstoff nach irgendeinem der vorgehenden Ansprüche, wobei der latente Härter ausgewählt ist aus Dicyandiamid, Guanaminen, Guanidinen, Aminoguanidinen und deren Derivaten, substituierten Harnstoffen, Imidazolen und Amin-Komplexen, wobei Dicyandiamid bevorzugt ist.

6. Einkomponentiger hitzehärtender Epoxidharzklebstoff nach irgendeinem der vorgehenden Ansprüche, ferner umfassend mindestens ein Zähigkeitsverbesserer **D**, vorzugsweise beträgt der Anteil Zähigkeitsverbesserers **D** von 5 -30 Gew.-%, 7 -25 Gew.-%, 10 -20 Gew.-%, besonders bevorzugt 10 -15 Gew.-%, bezogen auf das Gesamtgewicht des einkomponentigen hitzehärtenden Epoxidharzklebstoffs.

7. Einkomponentiger hitzehärtender Epoxidharzklebstoff nach irgendeinem der vorgehenden Ansprüche, wobei der Epoxidharzklebstoff eine Viskosität von mehr als 15'000 Pas, insbesondere mehr als 25'000 Pas, bei 25°C aufweist, wobei die Viskosität oszillographisch bestimmt wird mittels eines Rheometers mit beheizbarer Platte (MCR 301, AntonPaar) (Spalt 1000 µm, Mess-Plattendurchmesser: 25 mm (Platte/Platte), Deformation 0,01 bei 5 Hz, Temperatur: 25°C), insbesondere bevorzugt ist der Epoxidharzklebstoff bei 25°C fest.

8. Einkomponentiger hitzehärtender Epoxidharzklebstoff nach irgendeinem der vorgehenden Ansprüche, ferner umfassend mindestens ein physikalisches oder chemisches Treibmittel.

9. Verfahren zur Verklebung von hitzestabilen Substraten umfassend die Schritte
i) Applizieren eines hitzehärtenden Epoxidharzklebstoffs gemäss einem der Ansprüche 1 bis 8 auf die Oberfläche eines hitzestabilen Substrates **S1**, insbesondere eines Metalls;
ii) Kontaktieren des applizierten hitzehärtenden Epoxidharzklebstoffs mit der Oberfläche eines weiteren hitzestabilen Substrates **S2**, insbesondere eines Metalls;
iii) Erhitzen des hitzehärtenden Epoxidharzklebstoffs auf eine Temperatur von 100 - 220 °C, insbesondere von 120 - 200 °C, bevorzugt zwischen 160 und 190 °C;
wobei das Substrat **S2** aus dem gleichen oder einem unterschiedlichen Material wie das Substrat **S1** besteht.

10. Verwendung eines hitzehärtenden Epoxidharzklebstoffs gemäss einem der Ansprüche 1 bis 8 zum Verkleben oder Verstärken von Metallstrukturen oder verstärkendem Verfüllen von Hohlräumen im Fahrzeugbau oder Sandwichpanelbau.

11. Verwendung mindestens einer Carbonsäure ausgewählt aus substituierter oder unsubstituierter Bernsteinsäure und substituierter oder unsubstituierter Phthalsäure, zur Erhöhung der Zugscherfestigkeit gemäss der ASTM D1002-10 bei Aushärtung bei 170°C für 20 min und/oder bei 205°C für 40 min, insbesondere bei 170°C für 20 min, eines einkomponentigen hitzehärtenden Epoxidharzklebstoffs, insbesondere eines hitzehärtenden Epoxidharzklebstoffs im Fahrzeugbau und Sandwichpanelbau, besonders bevorzugt eines einkomponentigen hitzehärtenden Epoxidharzklebstoffs nach einem der Ansprüche 1-8.

12. Strukturschaum, erhalten durch Erhitzen eines hitzehärtenden Epoxidharzklebstoffs nach einem der Ansprüche 1-8.

13. Artikel, umfassend einen gehärteten Klebverbund, wobei der Klebverbund nach einem Verfahren gemäss Anspruch 9 erhältlich ist.
